# EUROPÄISCHE PATENTSCHRIFT

(11) **EP 1 344 971 B1**
(45) Veröffentlichungstag und Bekanntmachung des Hinweises auf die Patenterteilung: **03.11.2004**
(21) Anmeldenummer: 03290390.8
(22) Anmeldetag: 17.02.2003
(51) Int. Cl.: F16L 59/14, F16L 59/06

(54) **Leitungsrohr für den Transport von tiefgekühlten Medien**
Conduit for the transport of cryogenic fluids
Tuyau d'une canalisation pour le transport de fluides cryogéniques

(30) Priorität: 13.03.2002 DE 10211074
(43) Veröffentlichungstag der Anmeldung: 17.09.2003
(73) Patentinhaber: Nexans, 75008 Paris (FR)
(72) Erfinder: Schippl, Klaus, 30659 Hannover (DE); Lange, Stephan, 30900 Wedemark (DE)
(74) Vertreter: Döring, Roger, Dipl.-Ing.

(56) Entgegenhaltungen:
- EP-A- 0 326 923
- EP-A- 1 124 085
- DE-A- 3 338 465
- US-A- 5 996 638
- PATENT ABSTRACTS OF JAPAN vol. 1995, no. 01, 28. Februar 1995 (1995-02-28) & JP 06 281088 A (NATL SPACE DEV AGENCY JAPAN;OTHERS: 02), 7. Oktober 1994 (1994-10-07)

## Beschreibung

Die Erfindung betrifft ein Leitungsrohr für den Transport von tiefgekühlten Medien nach dem Oberbegriff des Anspruchs 1.

Aus der gattungsbildenden DE 33 38 465 A ist ein Leitungsrohr, bestehend aus zwei konzentrisch und im Abstand zueinander angeordneten Metallrohren, bekannt, bei dem in dem Ringspalt zwischen den Metallrohren eine Isolierungsschicht aus wechselweise übereinander angeordneten Lagen aus Isoliermaterial und reflektierendem Material vorgesehen und der Ringspalt evakuiert ist. Auf das Innenrohr ist ein Abstandshalter in Form einer Schraubenlinie aufgewickelt, der aus einem Metalldraht besteht, auf welchen in bestimmten Abständen mit einer Bohrung versehene Körper aus einem mechanisch widerstandsfähigen Isolierwerkstoff aufgesteckt sind. Das äußere Metallrohr ist von einem Außenmantel aus Kunststoff umgeben. Bei dem Gegenstand dieser Druckschrift handelt es sich um ein wärmeisoliertes Leitungsrohr für den Transport von erwärmten Flüssigkeiten oder Gasen mit einer Temperatur von mehr als 130 °C.

Aus der EP-0 326 923 A ist ein Leitungsrohr zum Transport von tiefgekühlten Medien bekannt, welches aus zwei konzentrisch und im Abstand zueinander angeordneten gewellten Metallrohren besteht, wobei in dem Ringspalt zwischen den Metallrohren eine wendelartig gewickelte Superisolierung aus wechselweise übereinander angeordneten Lagen aus Metallfolien oder metallisierten Kunststofffolien und Isoliermaterial sowie ein Vakuum vorgesehen ist.

Um den Evakuierungsvorgang zu beschleunigen, ist zwischen dem Innenrohr und der Superisolierungsschicht ein Ringspalt vorgesehen, der durch einen wendelartig auf das Innenrohr gewickelten Abstandshalter gebildet ist, der aus einzelnen miteinander verflochtenen Strängen aus Kunststoff besteht.

Die Vorteile des bekannten Leitungsrohres sind insbesondere darin zu sehen, daß auch Längen von mehr als 20 m schnell evakuiert werden können und Verdichtungen der Superisolierung infolge von Auflagekräften des Innenrohres auf einen kleinstmöglichen Bereich beschränkt bleiben. Durch die verbesserte Evakuierung kann bei gleichem Isolationswert auf teuren Superisolierungswerkstoff verzichtet werden und somit der Außendurchmesser des Leitungsrohres verringert werden.

Der Nachteil dieser bekannten Rohrkonstruktion ist darin zu sehen, daß wegen der Anteile an Kunststoffen in der Wärmeisolierung das Leitungsrohr höheren Temperaturen über einen längeren Zeitabschnitt nicht standhalten kann. So treten z. B. bei der Herstellung eines Außenmantels durch Extrusion eines thermoplastischen Kunststoffs Temperaturen von bis zu 300 °C an der äußeren Oberfläche des Leitungsrohres auf. Dies führt dazu, daß Temperaturen von bis zu 120 °C am Innenrohr auftreten können, so daß das Isoliermaterial, z. B. metallisierte Kunststoffolien oder Abstandshalter aus Kunststoff erweichen und ihre gewünschte Funktion nicht mehr erfüllen können. Der Wärmeeinfall von außen bis zum Innenrohr ist möglich, weil der Ringspalt während der Fertigung noch nicht evakuiert ist.

Der vorliegenden Erfindung liegt die Aufgabe zugrunde, das bekannte Leitungsrohr dahingehend zu verbessern, daß das Leitungsrohr, auch wenn der Ringspalt noch nicht evakuiert ist, Temperaturen von über 300 °C standhalten kann, ohne daß Teile der Isolierschicht ihre gewünschte Funktion einbüßen. Darüberhinaus soll ein Kontakt von Innenrohr und Außenrohr vermieden werden.

Diese Aufgabe wird durch die im Kennzeichen des Anspruchs 1 erfaßten Merkmale gelöst.

Weitere vorteilhafte Ausgestaltungen der Erfindung sind in den Unteransprüchen erfaßt.

Die Erfindung ist anhand eines schematisch dargestellten Ausführungsbeispiels näher erläutert.

Das Innenrohr 1 ist ein längsnahtgeschweißtes und gewelltes Metallrohr vorzugsweise aus rostfreiem Stahl. Auf das Innenrohr 1 ist eine Metallfolie 2, vorzugsweise ebenfalls aus rostfreiem Stahl aufgewickelt und zwar mit überlappenden Bandkanten. Auf der Metallfolie 2 liegt ein schraubenlinienförmig verlaufender Abstandshalter 3, über den eine sogenannte Superisolierung 4 gewickelt ist. Das Außenrohr 5 ist ebenfalls ein längsnahtgeschweißtes gewelltes Metallrohr und besteht, wie das Innenrohr 1 vorzugsweise aus rostfreiem Stahl. Auf das Außenrohr 5 ist ein Kunststoffmantel 6 durch Extrusion eines thermoplastischen Kunststoffes, z. B. Polyethylen, Polypropylen, Polyurethan oder eines anderen geeigneten Kunststoffes aufgebracht.

Im Innern des Innenrohres 1 befindet sich vorteilhafterweise ein nicht dargestellter Supraleiter auf der Basis von Metalloxiden (HT-Supraleiter).

Die Superisolierung 4 besteht aus wechselweise aufgebrachten Folien 4a aus Metall z. B. Aluminium oder rostfreiem Stahl und Lagen 4b aus einem Vlies z. B. einem Glasvlies oder einem Vlies aus keramischen Werkstoffen. Ca. 30 Lagen aus der Folie 4a und der Lage 4b bilden die Superisolationsschicht 4.

Der Abstandshalter 3 besteht aus einem Metalldraht 3a, vorzugsweise einem Draht aus rostfreiem Stahl, auf den eine Vielzahl von Perlen 3b aufgesteckt sind, die auf dem Metalldraht 3a fixiert sind. Jede Perle 3b ist durch Biegungen 3c des Metalldrahtes 3a vor und hinter der Perle 3b fixiert.

Die Schlaglänge, mit welcher der Abstandshalter 3 auf das Innenrohr 1 bzw. die Lage aus Metallfolie aufgewickelt ist, beträgt in etwa dem 10-fachen Durchmesser der Perle.

Der Durchmesser der Perlen sowie der Abstand der Perlen voneinander ist abhängig vom Außendurchmesser des mit der Metallfolie 2 bewickelten Innenrohres 1.

So beträgt beispielsweise der Durchmesser der Perlen 5 - 15 mm. Der Abstand der Perlen voneinander ist so zu bemessen, daß sichergestellt ist, daß ein Kontakt von Innenrohr 1 und Außenrohr 5 vermieden ist. Vorteilhafterweise beträgt der Abstand der Perlen zueinander 0,5 bis 2 D, wobei D der Außendurchmesser des Innenrohres 1 ist.

Ein Leitungsrohr nach der Lehre der Erfindung hat beispielsweise folgende

| Abmessungen: | | |
|---|---|---|
| Innenwellrohr | Dᵢ (Innendurchmesser) | = 39 mm |
| | D_{A} (Außendurchmesser) | = 44 mm |
| Außenwellrohr | Dᵢ (Innendurchmesser) | = 60 mm |
| | D_{A} (Außendurchmesser) | = 66 mm |

| | |
|---|---|
| Anzahl der Lagen | 20 |
| Perlendurchmesser | 4 mm |
| Perlenabstand | 150 mm |
| Schlaglänge des Abstandshalter | 50 mm |

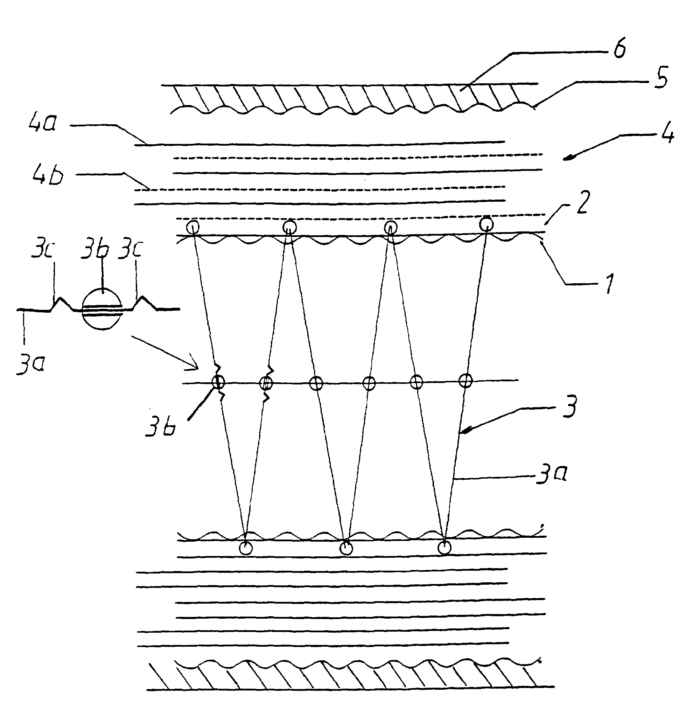

## Patentansprüche

1. Leitungsrohr zum Transport von tiefgekühlten Medien, bestehend aus mindestens zwei konzentrisch und im Abstand zueinander angeordneten Metallrohren(1,5), wobei in dem Ringspalt zwischen den Metallrohren (1,5) eine Isolierungsschicht (4) aus wechselweise übereinander angeordneten Lagen aus Isoliermaterial (4b) und reflektierendem Material(4a) vorgesehen und der Ringspalt evakuiert ist, bei welchem auf das Innenrohr (1) ein Abstandshalter in Form eines schraubenlinieförmig gewickelten Metalldrahtes (3a) vorgesehen ist, auf welchen in bestimmten Abständen mit einer Bohrung versehene Körper (3b) aus einem mechanisch widerstandsfähigen Isolierwerkstoff aufgesteckt sind, **dadurch gekennzeichnet,** da**ß** die Körper (3b) Perlen oder Kugeln aus Glas oder Keramik sind, die durch Verbiegen des Metalldrahtes (3a) vor und hinter den Körpern fixiert sind und die Lagen (4b) aus Isoliermaterial aus einem Vlies aus Glas oder Keramik bestehen.

2. Leitungsrohr nach Anspruch 1, **dadurch gekennzeichnet, daß** der Metalldraht (3a) ein Draht aus austenitischem Stahl ist.

3. Leitungsrohr nach Anspruch 1 oder 2, **dadurch gekennzeichnet, daß** die Metallrohre (1,5) längsnahtgeschweißte und gewellte Metallrohre sind.

4. Leitungsrohr nach einem der Ansprüche 1 bis 3, **dadurch gekennzeichnet, daß** die Metallrohre (1,5) aus austenitischem Stahl bestehen.

5. Leitungsrohr nach Anspruch 3 oder 4, **dadurch gekennzeichnet, daß** auf das gewellte Innenrohr (1) eine Lage einer reflektierenden Metallfolie (2) vorzugsweise einer Folie aus austenitischem Stahl aufgewickelt ist.

6. Leitungsrohr nach Anspruch 5, **dadurch gekennzeichnet, daß** der Metalldraht (3a) auf die Lage der reflektierenden Metallfolie (2) aufgewickelt ist.

7. Leitungsrohr nach einem der Ansprüche 1 bis 6, **dadurch gekennzeichnet,** da**ß** der Durchmesser der Kugeln oder Perlen (3b) 5 - 15 mm beträgt.

8. Leitungsrohr nach einem der Ansprüche 1 bis 7, **dadurch gekennzeichnet,** da**ß** der Abstand zwischen den Körpern (3b) 0,5 - 2 D beträgt, wobei D der Außendurchmesser des Innenrohres (1) ist.

9. Verwendung eines Leitungsrohres nach einem der Ansprüche 1 bis 8 als Umhüllung für einen Supraleiter, insbesondere für einen Hochtemperatursupraleiter.

## Claims

1. Conduit for transporting refrigerated media consisting of at least two concentric, spaced metal pipes (1,5), wherein an insulating layer (4) is provided in the annular gap between the metal pipes (1,5), said insulating layer consisting of alternating layers of insulating material (4b) and reflective material (4b), and the annual gap is evacuated, provided on the inner pipe (1) is a spacer in the form of a helically wound metal wire (3a) onto which bodies (3b) are placed at specific intervals consisting of a mechanically strong insulating material provided with holes, **characterized in that** the bodies (3b) are beads or spheres consisting of glass or ceramic that are affixed by bending the metal wire (3a) before and after the bodies, and the layers (4b) of insulating material consists of a glass or ceramic fleece.

2. Conduit according to claim 1, **characterized in that** the metal wire (3a) is a wire of austenitic steel.

3. Conduit according to claim 1 or 2, **characterized in that** the metal pipes (1,5) are corrugated metal pipes welded with a longitudinal seam.

4. Conduit according to one of claims 1 to 3, **characterized in that** the metal pipes (1,5) are consisting of austenitic steel.

5. Conduit according to claim 3 or 4, **characterized in that** a layer of reflective metal foil (2), preferably a foil of austenitic steel, is wound on the corrugated inner pipe (1).

6. Conduit according to claim 5, **characterized in that** the metal wire (3a) is wound on the layer of reflective metal foil (2).

7. Conduit according to one of claims 1 to 6, **characterized in that** the diameter of the spheres or beads (3b) is 5-15 mm.

8. Conduit according to one of claims 1 to 7, **characterized in that** the spacing between the bodies (3b) is 0.5-2 D, wherein D is the outer diameter of the inner pipe (1).

9. Use of a conduit according to one of claims 1 to 8 as a jacket for a superconductor, especially a high-temperature superconductor.

## Revendications

1. Conduite pour le transport de matières congelées, composée d'au moins deux tubes métalliques (1,5) concentriques et écartés l'un de l'autre avec, dans l'interstice annulaire, le vide d'air et une couche isolante (4) formée d'une alternance de couches superposées d'un matériau isolant (4b) et d'un matériau réfléchissant (4a), avec un écarteur en forme d'hélice enroulé sur le tube intérieur (1), composé d'un fil métallique (3a) sur lequel sont enfilés de loin en loin, des éléments (3b) pourvus d'un trou et composés d'un matériau isolant présentant une certaine résistance mécanique, **caractérisé par le fait que** les éléments (3b) sont des perles ou billes de verre ou de céramique immobilisées par-devant et par-derrière par des torsions du fil métallique (3a) et que les couches (4b) de matériau isolant se composent d'un non-tissé de fibres de verre ou de céramique.

2. Conduite selon la revendication 1, **caractérisée par le fait que** le fil métallique (3a) est un fil d'acier austénitique.

3. Conduite selon la revendication 1 ou 2, **caractérisée par le fait que** les tubes métalliques (1, 5) sont des tubes métalliques ondulés et soudés longitudinalement.

4. Conduite selon l'une quelconque des revendications 1 à 3, **caractérisée par le fait que** les tubes métalliques (1, 5) se composent d'acier austénitique.

5. Conduite selon la revendication 3 ou 4, **caractérisée par le fait que** sur le tube intérieur ondulé (1) se trouve une feuille métallique (2) réfléchissante, de préférence une feuille d'acier austénitique.

6. Conduite selon la revendication 5, **caractérisée par le fait que** le fil métallique (3a) est enroulé sur la couche de feuille métallique réfléchissante (2).

7. Conduite selon l'une quelconque des revendications 1 à 6, **caractérisée par le fait que** le diamètre des billes ou perles (3b) est compris entre 5 et 15 mm.

8. Conduite selon l'une quelconque des revendications 1 à 7, **caractérisée par le fait que** la distance entre les éléments (3b) est comprise entre 0,5 et 2 D, D étant le diamètre extérieur du tube intérieur (1).

9. Utilisation d'une conduite selon l'une quelconque des revendications 1 à 8 comme gainage d'un supraconducteur, en particulier d'un supraconducteur à hautes températures.
